# EUROPEAN PATENT APPLICATION

(11) **EP 0 908 687 A1**
(43) Date of publication of application: **14.04.1999**
(21) Application number: 98202664.3
(22) Date of filing: 06.08.1998
(51) Int. Cl.: F24H 4/04

(54) **Device for heating water**

(30) Priority: 09.10.1997 NL 1007244
(71) Applicant: J.E. Stork Ventilatoren B.V., 8041 AM Zwolle (NL)
(72) Inventor: De Graaf, Abraham Anthony John, 8016 MA Zwolle (NL)
(74) Representative: Schumann, Bernard Herman Johan

(57) **Abstract**

A device (1) for heating water (2), which device comprises:
an inlet (3) for return air (4) from a space;
an outlet (5) for return air (6) to the outside;
a first heat exchanger (8) present between this inlet (3) and this outlet (5) and forming part of an evaporator (7);
a water storage tank (9) with a water feed (19) and a water discharge (20);
a second heat exchanger (11) present in this water storage tank (9) and forming part of a condenser (10);
an electrically drivable compressor (13) incorporated with the evaporator (7) and the condenser (10) in a heat pump circuit (12) filled with two-phase medium;
   such that when return air is transported from the inlet (3) to the outlet (5) heat is extracted from this return air by the first heat exchanger (8) and, during operation of the compressor (13), is fed at increased temperature to the second heat exchanger via the two-phase medium in the heat pump circuit (12) for heating water present in the water storage tank (9).

## Description

The invention relates to a device for heating water. Known for this purpose is a water storage tank which is provided with a water feed and water discharge, in which water storage tank an electrical heating element is received for heating the water.

Further known are space heating devices which are provided with a heat exchanger with which heat can effectively be extracted from return air from a heated space, for instance a dwelling, which heat is used to pre-heat fresh outside air which is used as ventilation air and as heated air for heating the space.

It is an object of the invention to provide a device for heating water which makes use of heat recovery from the return air from a space, which heat is used to heat water present in a water storage tank to a considerably higher temperature.

In respect of the above objective, the invention provides a device as specified in the appended claim 1.

In order to ensure that the first heat exchanger does not become blocked by dust or caked-on dirt, the structure according to claim 2 can be applied.

To enable realization of an air flow with a preferably adjustable flow rate, the embodiment according to claim 3 is recommended. This fan can be placed as desired in the region of the inlet or the region of the outlet. Placing in the outlet is recommended for noise limitation purposes.

The measures according to claim 4 provide a considerably increased efficiency in combination with a control which is very easy to realize in electronic manner.

A preferred embodiment is specified in claim 5.

Claim 6 relates to a preferred embodiment in which the control means can for instance be adapted to energize the compressor and thus heat the water during a period of cheap electricity, for instance the so-called off-peak rate.

The device according to the invention is thus capable of heating the water present in the tank using minimal energy for a limited period, for instance a day, by making use of the heat pump.

The invention will now be elucidated with reference to the annexed drawings. In the drawings:

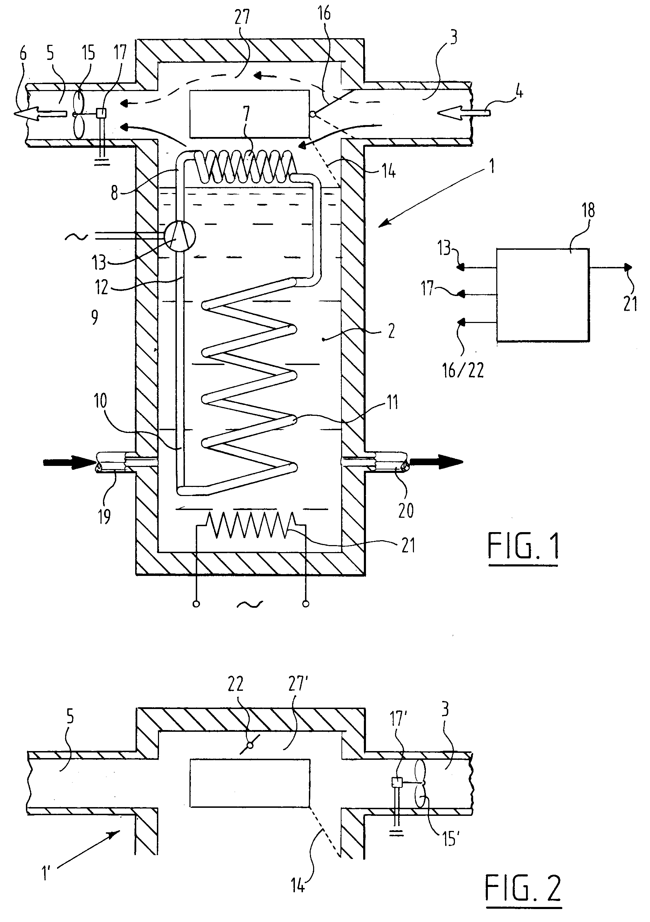

figure 1 shows a first embodiment in highly schematic form;
figure 2 shows a part of a second embodiment; and

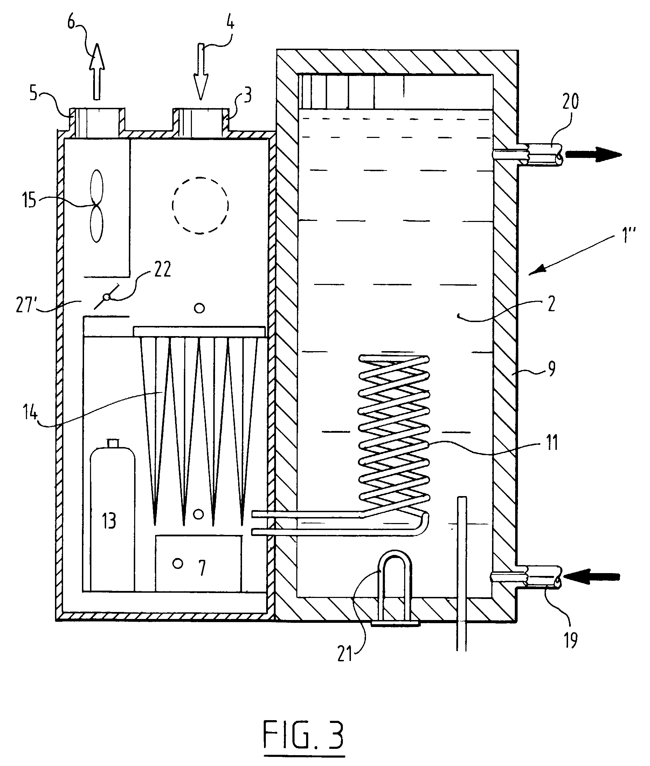

figure 3 shows a schematic representation of a third embodiment.

The different components are designated with their reference numerals in the appended claims.

A short explanation follows by way of extra clarification.

The drawings show the following additional parts:
* a heating element 21 which is powered with for instance 230 volt alternating current, wherein energizing is controlled by control means 18, for instance a PLC.
* valve 22 which is controllable by control means 18 and can open and close bypass 27'.
* valve 16 which can guide the air flow 4 selectively to the first heat exchanger 8 or solely via bypass 27'. The relevant positions and air flows are shown respectively with full lines and broken lines.

A two-phase medium is arranged in the heat pump circuit. This may be a freon, ammonia, an alkane or other suitable medium.

Heating element 21 is not necessary under all conditions. It can however be used effectively for possibly required rapid additional heating of water 2 or for heating under conditions in which no substantial heat can be extracted from return air 4.

## Claims

1. Device (1) for heating water (2), which device (1) comprises:
an inlet (3) for return air (4) from a space, for instance a dwelling;
an outlet (5) for return air (6) to the outside;
a first heat exchanger (8) present between this inlet (3) and this outlet (5) and forming part of an evaporator (7);
a water storage tank (9) with a water feed (19) and a water discharge (20);
a second heat exchanger (11) present in this water storage tank (9) and forming part of a condenser (10);
an electrically drivable compressor (13) incorporated with the evaporator (7) and the condenser (10) in a heat pump circuit (12) filled with two-phase medium;
such that when return air is transported from the inlet (3) to the outlet (5) heat is extracted from this return air (4) by the first heat exchanger (8) and, during operation of the compressor (13), is fed at increased temperature to the second heat exchanger via the two-phase medium in the heat pump circuit (12) for heating water (2) present in the water storage tank (9).

2. Device as claimed in claim 1, wherein a dust filter (14) is placed upstream of the first heat exchanger (8).

3. Device as claimed in claim 1, wherein a fan (15) is placed between the inlet (3) and the outlet (5).

4. Device as claimed in claim 3, wherein the fan (15) comprises a direct-current motor (17).

5. Device as claimed in claim 1, comprising a bypass (27;27') which can be switched on and off by a controllable valve (16) and which is connected between the inlet (3) and the outlet (5).

6. Device as claimed in claim 5, comprising control means (18) for energizing the compressor (13) for a time period to be selected during control of the bypass (27; 27') respectively for rendering the compressor (13) inoperative for a following time period while the bypass (27;27') is held open.
